Europäisches Patentamt

European Patent Office

Office européen des brevets

(19)

(11) Publication number: **0 413 426 B1**

(12) **EUROPEAN PATENT SPECIFICATION**

(45) Date of publication of patent specification: **24.08.94**    (51) Int. Cl.⁵: **B60C 3/04**

(21) Application number: **90306937.5**

(22) Date of filing: **25.06.90**

(54) **Pneumatic radial tires having improved bead portion durability.**

(30) Priority: **15.08.89 JP 209630/89**

(43) Date of publication of application:
**20.02.91 Bulletin 91/08**

(45) Publication of the grant of the patent:
**24.08.94 Bulletin 94/34**

(84) Designated Contracting States:
**DE FR GB IT**

(56) References cited:
**EP-A- 0 352 140**
**EP-A- 0 393 965**
**FR-A- 2 082 073**
**FR-A- 2 314 059**
**US-A- 4 770 221**

(73) Proprietor: **Bridgestone Corporation**
**1-1, Kyobashi 1-Chome**
**Chuo-Ku**
**Tokyo 104 (JP)**

(72) Inventor: **Nakajima, Yukio**
**3-2-203, Ogawahigashi-Cho 3-chome**
**Kodaira City, Tokyo (JP)**

(74) Representative: **Whalley, Kevin et al**
**MARKS & CLERK,**
**57/60 Lincoln's Inn Fields**
**London WC2A 3LS (GB)**

## Description

This invention relates to pneumatic radial tires, and more particularly to an improvement of the durability of the bead portion of such a tire.

The durability of the bead portion in pneumatic radial tires has been strongly demanded in passenger car tires, in which the turnup end of the carcass ply easily forming a breakage nucleus is located near to the bead core, as well as in heavy duty tires (for trucks, buses and the like), because the arrangement of the turnup end is necessary in the passenger car tires in order to sufficiently develop good ride comfortability against vibrations, and because heavy duty tires are required to have a repetitive lifecycle as a base tire used for retreading upon wearing of the tread rubber layer.

It is unavoidable that the problems of the bead portion in this type of the tire are caused by repeatedly subjecting the turnup end of the carcass ply or an upper end of a chafer frequently arranged for covering the turnup end to a large tensile strain outward in the radial direction of the tire. When the tires are cut for inspection after use, there have frequently been observed rubber fatigue and hence separation failure.

In order to improve the bead portion durability, it has hitherto been attempted to add a reinforcing member or a special member to the tire to mitigate the above strain and control the growth of cracks due to rubber fatigue. However, such additional members not only adversely affect the tire productivity but also undesirably bring about an increase of the cost and increase of heat generation.

In general, radial tires for passenger cars, in which the turnup end is located near to the bead core in accordance with the demand for improving the ride comfortability against vibrations, and also heavy duty pneumatic tires for trucks and buses repeatedly requiring retreading, comprise a pair of bead portions, a pair of sidewall portions and a tread portion extending between the sidewall portions and are provided with a carcass comprised of at least one radial carcass ply containing cords extending from one of the bead portions to the other bead portion as a casing reinforcement, at least one ply of which carcass being wound around the bead core of the bead portion from the inside toward the outside to form a turnup structure. Such a turnup end of the carcass ply affects the bead portion durability together with an end of a chafer frequently disposed along the carcass turnup. However, the aforementioned conventional countermeasure directly applied to the turnup end as well as the chafer end is temporary and poor in practical effect.

The inventor has made various studies with respect to a carcass profile capable of advantageously realizing improvement of bead portion durability without requiring a special reinforcing member or particular additional member, and as a result the present invention has been accomplished.

According to the invention, there is provided a pneumatic radial tire comprising a carcass comprised of at least one cord ply toroidally extending between a pair of bead portions as a casing reinforcement for a pair of sidewall portions connecting to the above bead portions and a tread portion, at least one cord ply of which carcass being wound around a bead core of the bead portion from the inside toward the outside to form a turnup structure or further a chafer covering such a turnup end, characterized in that when the tire is mounted onto a normal rim and inflated under an internal pressure corresponding to 5% of a normal internal pressure, a carcass line of the carcass in radial section of the tire at a self-posture under no load has at least two inflection points between positions A and B in which A is a position intersecting with a vertical line drawn from a rim base line RL at a width position of the normal rim and B is a position corresponding to a maximum width of the carcass, and that at least one of the turnup end of the carcass and the chafer end is located in a region defined by two parallel lines $Q_1$ and $Q_2$ in which $Q_1$ and $Q_2$ are parallely drawn in perpendicular to a straight line L defined by connecting two inflection points near to the position A to each other at a distance d of not more than 10 mm from a point P most separated from the straight line L and located on the carcass line.

In a preferred embodiment of the invention, the distance d is within a range of 4-6 mm.

The invention will be further described, by way of example only, with reference to the accompanying drawings, wherein:

Figs. 1a and 1b are schematic views illustrating the carcass line of one embodiment of a pneumatic tire according to the invention;

Fig. 2 is a diagrammatically sectional view of a radial tire according to the invention;

Fig. 3 is a schematic view showing deformation behaviour upon inflation under a normal internal pressure;

Fig. 4 is a graph showing a comparison of tension distribution in the carcass ply between a tire according to the invention and a conventional tire;

Fig. 5 is a schematic view showing a comparison of carcass profile used in the comparison of Fig. 4; and

Figs. 6 and 7 are sectional views of embodiments of radial tires according to the invention.

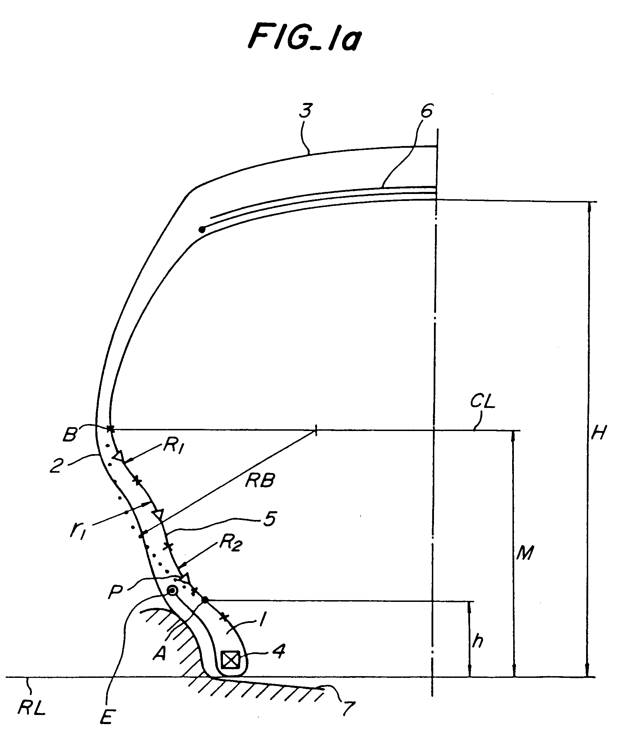

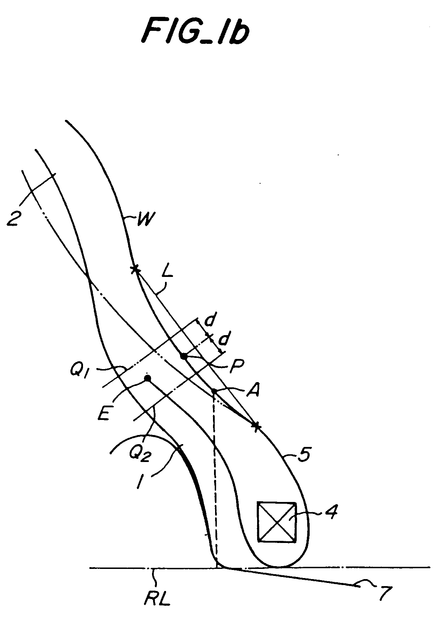

In Fig. 1a is shown a left-half section of a pneumatic radial tire for passenger cars according to the invention in radial section thereof at a self-posture under no load when the tire is mounted onto a rim and inflated under an internal pressure corresponding to 5% of normal internal pressure. This tire is symmetrical with respect to the equatorial plane of the tire. Moreover, Fig. 1b is an enlarged schematic view of a bead portion of the tire shown in Fig. 1a.

In Fig. 1, numeral 1 is a bead portion, numeral 2 a sidewall portion, numeral 3 a tread portion, numeral 4 a bead core, numeral 5 a carcass, numeral 6 a belt, and numeral 7 a normal rim closely fitted into the bead portion 1.

The carcass 5 is comprised of at least one radial cord ply toroidally extending between the bead portions 1. In the illustrated embodiment, the carcass is comprised of a single cord ply, but two or three plies may be used. In any case, at least one cord ply is wound around the bead core 4 from inside of the tire toward the outside to form a turnup structure having a turnup end E in the usual manner.

In the above tire section at the self-posture under no load, an intersect point of a perpendicular line drawn from a rim base line RL at a width position of the normal rim 7 with the carcass line is defined as a position A, and a point corresponding to the maximum width of the carcass is defined as a position B. Furthermore, a radius of an arc passing through the position B and having a center on a straight line parallel to the rim base line RL is RB.

In the invention, it is preferable that a height h of the position A measured from the rim base line RL is within a range of 0.1-0.25 with respect to a maximum height H of the carcass measured from the rim base line RL, and also a height of the position B is within a range of 0.35-0.70 with respect to the maximum height H.

The carcass line of the carcass 5 shown by a meandering curve W has at least two inflection points (marked by X) between the positions A and B. Among arcs passing through adjoining inflection points X and a point $\triangle$ most separated from a straight line connecting the above inflection points (see Fig. 1a), when a radius of an arc having a center in the inner direction of the tire is represented by $R_i$ (i = 1, $\bullet\bullet\bullet$ n) and a radius of an arc having a center in the outer direction of the tire is represented by $r_i$ (i = 1, $\bullet\bullet\bullet$ m), it is preferable that the above radii are within ranges of the following equations (1) - (2) with respect to the radius RB, respectively;

$$0.1 \leqq R_i/RB \leqq 0.7 \ (i = 1, \bullet\bullet\bullet \ n) \qquad (1)$$

$$0.3 \leqq r_i/RB \leqq 1.0 \ (i = 1, \bullet\bullet\bullet \ m) \qquad (2)$$

Thus, the carcass line has at least two inflection points between the positions A and B as mentioned above.

According to the invention, at least one of the turnup end E of the carcass 5 and an end of a chafer (not shown) arranged along the turnup and comprised of high modulus cords such as steel cord is located in a region defined by two parallel lines $Q_1$ and $Q_2$ in which $Q_1$ and $Q_2$ are parallely drawn perpendicular to a straight line L defined by connecting two inflection points near to the position A to each other at a distance d of not more than 10 mm from a point P most separated from the straight line L and located on the carcass line.

Thus, according to the invention, the bead portion durability of the tire can be improved while using only the conventionally used members without requiring additional members or change to the structure of the tire as well as the reinforcing member for the bead portion, so that the invention has great merits in the quality and productivity of the tire.

The aforementioned particular profile of the carcass line is obtained by taking care in the formation of a green tire so as to control the distribution of rubber gauge ranging from an inner wall of a mold to the carcass ply in a rotational axis direction of the tire in the building-up and vulcanization of the tire.

If it is intended to strictly control the change or scattering of the carcass line due to a so-called "rubber flow" in the vulcanization, the following method is effective.

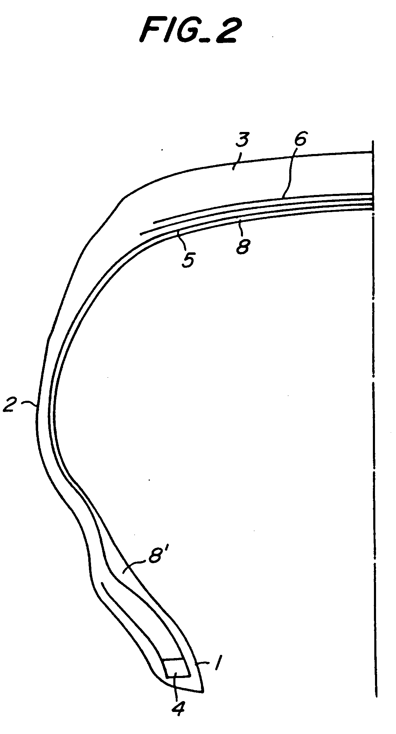

That is, the cord ply of the carcass 5 extending between the bead cores 4 is merely arranged along the inner shape of the tire according to the conventional building-up and vulcanization method. On the other hand, according to the invention, it is convenient to form an inner liner 8 having locally different gauge portions 8' as shown in Fig. 2.

In addition, the change in the curvature of the carcass line may properly be controlled by forming continuous protrusions on a periphery of a bladder for vulcanization at positions corresponding to curvature changed portions of the carcass line.

By utilizing such a NON-labour intensive technique, the carcass line according to the invention can be properly controlled without causing variation in the productivity.

According to the invention, the carcass line of the pneumatic radial tire in the radial section at the self-posture under an internal pressure corresponding to 5% of a normal internal pressure has at least two inflection points between the positions A and B.

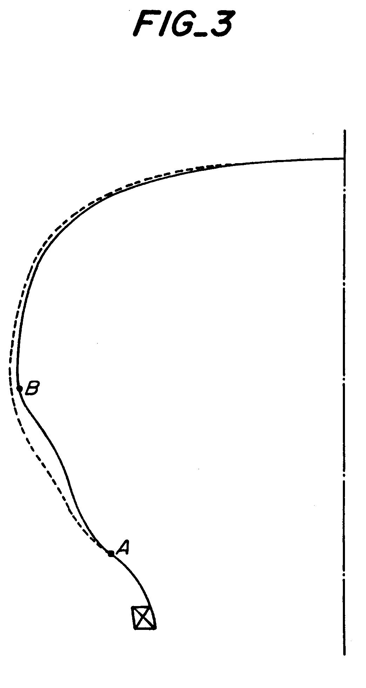

Fig. 3 shows a change of carcass profile in the tire having two inflection points between the positions A and B from a state of inflating under an internal pressure corresponding to 5% of normal internal pressure (solid line) to a state of inflating under 100% normal internal pressure (broken lines). As to the deformation between the positions A and B, a portion of the carcass line having a center of curvature in an outer direction of the tire beneath the position B has a sufficient capacity against the deformation under the inflation of internal pressure, and largely deforms the tire outward upon inflation under internal pressure.

On the other hand, a portion of the carcass line having a center of curvature in the inner direction of the tire therebeneath has a small capacity against the deformation under the inflation of internal pressure, and slightly deforms the tire outward upon inflation under internal pressure.

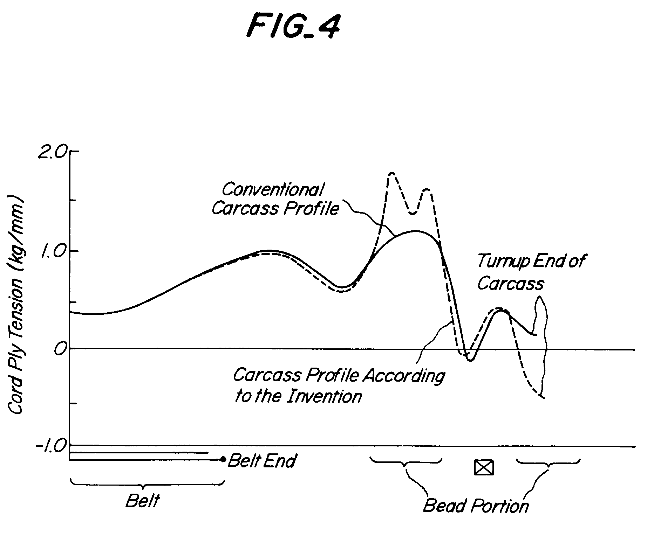

As a result, the deformation in the portion beneath the maximum width of the tire upon inflation under internal pressure is considered to be a bending deformation around the vicinity of the region defined by the parallel lines $Q_1$ and $Q_2$ in Fig. 1b. When the tire having the carcass profile according to the invention is compared with a tire having the conventional carcass profile, as shown in Fig. 4, the cord ply located outward of the tire has a large compression tension (compression strain). The growth of breakage easily produced at the turnup end E can be suppressed by disposing the turnup end in a large compression tension portion.

As to radius of curvature of the carcass line and the adequate arrangement of the inflection point for producing the most effective compression tension (compression strain) at the position of the turnup end E of the carcass 5, it is preferable that the radii $R_i$ (i = 1, ••• n) and $r_i$ (i = 1, ••• m) are within the following ranges with respect to the radius RB of the arc AB previously described in Fig. 1.

$$0.1 \leq R_i/RB \leq 0.7 \ (i = 1, \bullet\bullet\bullet \ n)$$
$$0.3 \leq r_i/RB \leq 1.0 \ (i = 1, \bullet\bullet\bullet \ m)$$

Furthermore, the distance d of the turnup end E of the carcass 5 or the chafer end with respect to the point P is not more than 10 mm, preferably 4-6 mm.

When the gauge of the inner liner 8 is locally varied as previously mentioned in Fig. 2, in order to sufficiently restrain the change of the casing line, it is desirable that the gauge of the portion 8' in Fig. 2 is 1.7 to 8 times, preferably 2 to 4 times, the average gauge of the inner liner 8.

The following examples are given in illustration of the invention and are not intended as limitations thereof.

### Example 1

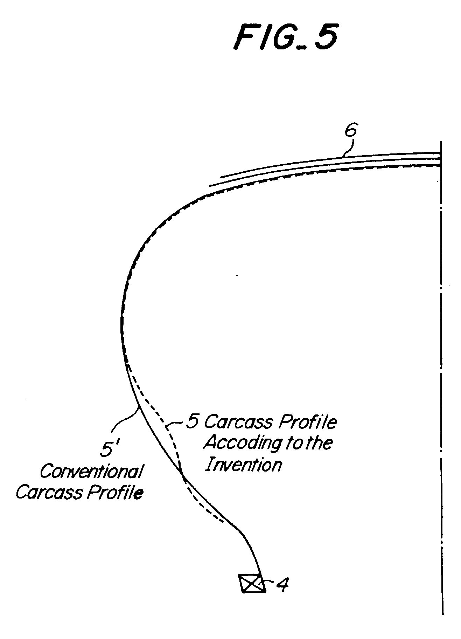

There was provided a passenger car tire (size: 165 SR13) comprising a belt 6 of two steel cord layers and one carcass ply of polyester fiber cords and having a carcass line (broken lines in Fig. 5) satisfying h/H: 0.11, M/H: 0.52, $R_1$/RB: 0.3, $r_1$/RB: 0.6 and $R_2$/RB: 0.55, in which the turnup end E of the carcass 5 was located at a distance d from the point P of 4 mm. Then, the actual running test for the bead portion durability was made with respect to this tire together with a tire having a conventional carcass line of natural equilibrium state (solid line in Fig. 5). As a result, the running distance was increased by about 20% as compared with the conventional tire.

### Example 2

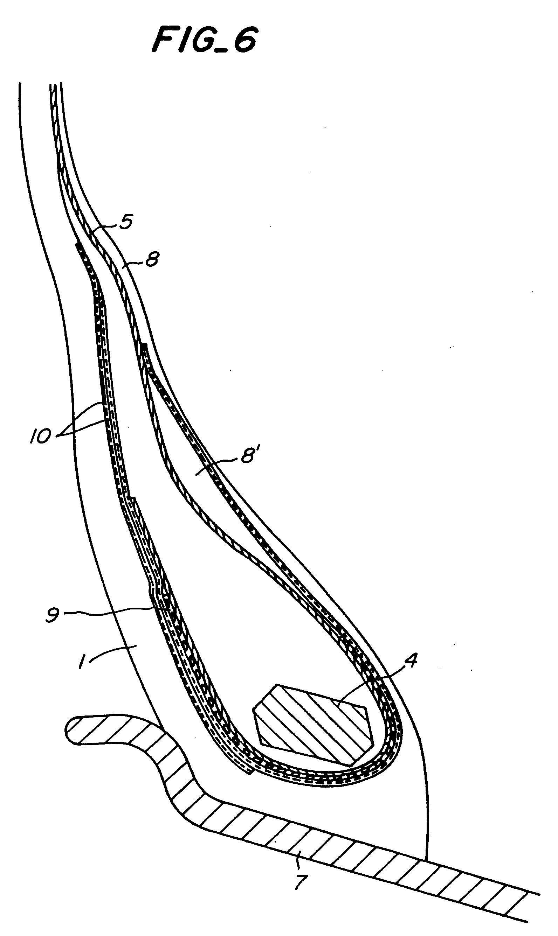

There was provided a block-pattern tire (size: 11/70 R22.5) comprising a single chafer 9 of wire cords and two auxiliary reinforcing layers 10 of nylon cords as shown in Fig. 6 and having a carcass line satisfying h/H: 0.18, M/H: 0.49, $R_1$/RB: 0.5, $r_1$/RB: 0.45 and $R_2$/RB: 0.3, in which the turnup end E of the carcass 5 was located at a middle region between the lines $Q_1$ and $Q_2$ of Fig. 1. Then, the actual running test for the bead portion durability was made with respect to this tire. As a result, the running distance was increased by 16% as compared with the conventional tire having a carcass line of natural equilibrium state.

### Example 3

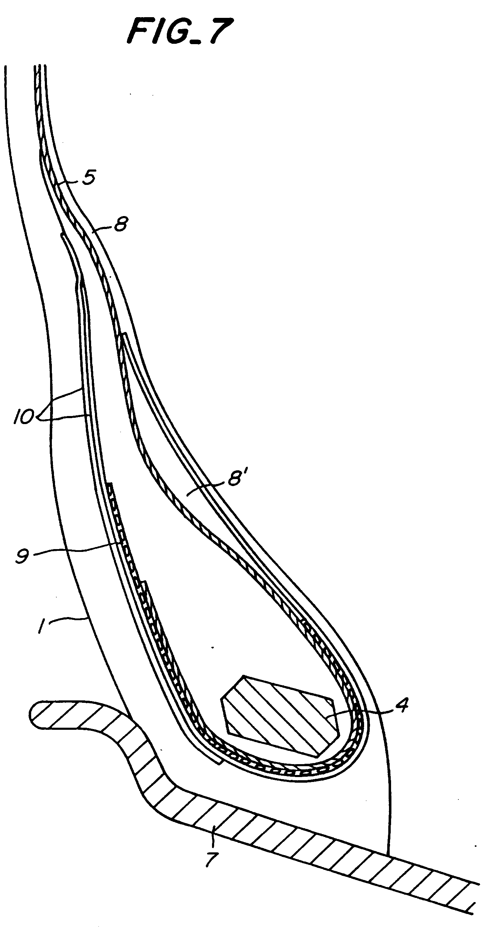

There was provided a block-pattern tire (size: 11/70 R22.5) comprising a single chafer 9 of wire cords arranged over the turnup end of the carcass 5 and two auxiliary reinforcing layers 10 of nylon cords covering the chafer as shown in Fig. 7 and having a carcass line satisfying h/H: 0.18, M/H: 0.49, $R_1$/RB: 0.5, $r_1$/RB: 0.45 and $R_2$/RB: 0.3, in which the end of the chafer 9 was located between the lines $Q_1$ and $Q_2$ of Fig. 1. Then, the actual running test for the bead portion durability was made with respect to this tire. As a result, the running distance was increased by 13% as compared with a conventional tire having a carcass line of natural equilibrium state.

As mentioned above, according to the invention, the rigidity of the bead portion in the tire can advantageously be increased without enhancing the bead reinforcements or increasing the internal pressure, which not only contributes to the improvement of the running stability of the tire but also realizes a remarkable improvement of the bead portion durability.

## Claims

1. A pneumatic radial tire comprising a carcass (5) comprised of at least one cord ply toroidally extending between a pair of bead portions (1) as a casing reinforcement for a pair of sidewall portions (2) connecting to the above bead portions and a tread portion (3), at least one cord ply of which carcass being wound around a bead core (4) of the bead portion from inside toward outside to form a turnup structure, characterized in that when the tire is mounted onto a normal rim (7) and inflated under an internal pressure corresponding to 5% of a normal internal pressure, a carcass line of the carcass in radial section of the tire at a self-posture under no load has at least two inflection points between positions A and B in which A is a position intersecting with a vertical line drawn from a rim base line RL at a width position of the normal rim and B is a position corresponding to a maximum width of the carcass, and that the turnup end of the carcass is located in a region defined by two parallel lines $Q_1$ and $Q_2$ in which $Q_1$ and $Q_2$ are parallely drawn in perpendicular to a straight line L defined by connecting two inflection points near to the position A to each other at a distance d of not more than 10 mm from a point P most separated from the straight line L and located on the carcass line.

2. A pneumatic radial tire comprising a carcass (5) comprised of at least one cord ply toroidally extending between a pair of bead portions (1) as a casing reinforcement for a pair of sidewall portions (2) connecting to the above bead portions and a tread portion (3), at least one cord ply of which carcass being wound around a bead core (4) of the bead portion from inside toward outside to form a turnup structure, and a chafer (9) arranged so as to cover the turnup end, characterized in that when the tire is mounted onto a normal rim (7) and inflated under an internal pressure corresponding to 5% of a normal internal pressure, a carcass line of the carcass in radial section of the tire at a self-posture under no load has at least two inflection points between positions A and B in which A is a position intersecting with a vertical line drawn from a rim base line RL at a width position of the normal rim and B is a position corresponding to a maximum width of the carcass, and that at least one of the turnup end of the carcass and the chafer end is located in a region by two parallel lines $Q_1$ and $Q_2$ in which $Q_1$ and $Q_2$ are parallely drawn in perpendicular to a straight line L defined by connecting two inflection points near to the position A to each other at a distance d of not more than 10 mm from a point P most separated from the straight line L and located on the carcass line.

3. A tire as claimed in claim 1 or 2, characterized in that said distance d is within a range of 4-6 mm.

**Patentansprüche**

1. Radialer Luftreifen mit einer Karkasse (5), die mindestens eine Cordlage aufweist, die sich als Mantelverstärkung für zwei sich an die obigen Wulstbereiche anschließende Seitenwandbereiche (2) und einen Laufflächenbereich (3) toroidförmig zwischen zwei Wulstbereichen (1) erstreckt, wobei mindestens eine Cordlage dieser Carcasse von innen nach außen um einen Wulstkern (4) des Wulstbereichs herumgeführt ist, um eine Umstülpstruktur zu bilden, dadurch gekennzeichnet, daß dann, wenn der Reifen auf einer normalen Felge (7) montiert wird, und mit einem inneren Druck aufgeblasen wird, der 5% des normalen inneren Drucks entspricht, eine Karkassenlinie der Karkasse im radialen Schnitt des Reifens in einer natürlichen Lage ohne Belastung mindestens zwei Wendepunkte zwischen den Positionen A und B aufweist, wobei A eine Position ist, bei der sich die Karkassenlinie mit einer vertikalen Linie schneidet, die von einer Felgenbasislinie RL bei einer Breitenposition der normalen Felge gezogen wurde, und B eine Position ist, die der maximalen Breite der Karkasse entspricht, und daß das Umstülp-Ende der Karkasse in einem Gebiet gelegen ist, das durch zwei parallele Linien $Q_1$ und $Q_2$ festgelegt ist, wobei $Q_1$ und $Q_2$ senkrecht zu einer geraden Linie L, die durch die Verbindung von zwei nahe bei der Position A liegenden Wendepunkten festgelegt ist, in einem Abstand d von nicht mehr als 10 mm von einem Punkt P, der am weitesten von der geraden Linie L entfernt ist und auf der Karkassenlinie gelegen ist, parallel zueinander gezogen sind.

2. Radialer Luftreifen mit einer Karkasse (5), die mindestens eine Cordlage aufweist, die sich als Mantelverstärkung für zwei sich an die obigen Wulstbereiche anschließende Seitenwandbereiche (2) und einen Laufflächenbereich (3) toroidförmig zwischen Zwei Wulstbereichen (1) erstreckt, wobei mindestens eine Cordlage dieser Carcasse von innen nach außen um einen Wulstkern (4) des Wulstbereichs herumgeführt ist, um eine Umstülpstruktur zu bilden, und ein Wulstschutzstreifen (9) so angeordnet ist, daß er das Umstülp-Ende bedeckt, dadurch gekennzeichnet, daß dann, wenn der Reifen auf einer normalen Felge (7) montiert wird, und mit einem inneren Druck aufgeblasen wird, der 5% des normalen inneren Drucks entspricht, eine Karkassenlinie der Karkasse im radialen Schnitt des Reifens in einer natürlichen Lage ohne Belastung mindestens zwei Wendepunkte zwischen den Positionen A und B aufweist, wobei A eine Position ist, bei der sich die Karkassenlinie mit einer vertikalen Linie schneidet, die von einer Felgenbasislinie RL bei einer Breitenposition der normalen Felge gezogen wurde, und B eine Position ist, die der maximalen Breite der Karkasse entspricht, und daß mindestens entweder das Umstülp-Ende der Karkasse oder das Wulstschutzstreifen-Ende in einem Gebiet gelegen ist, das durch zwei parallele Linien $Q_1$ und $Q_2$ festgelegt ist, wobei $Q_1$ und $Q_2$ senkrecht zu einer geraden Linie L, die durch die Verbindung von zwei nahe bei der Position A liegenden Wendepunkten festgelegt ist, in einem Abstand d von nicht mehr als 10 mm von einem Punkt P, der am weitesten von der geraden Linie L entfernt ist und auf der Karkassenlinie gelegen ist, parallel zueinander gezogen sind.

3. Reifen gemäß Anspruch 1 oder 2, dadurch gekennzeichnet, daß der Abstand d innerhalb eines Bereichs von 4-6 mm liegt.

**Revendications**

1. Bandage pneumatique à nappe radiale, comprenant une carcasse (5) qui comprend au moins une nappe de câblés s'étendant en une configuration toroïdale entre une paire de portions de talons (1), à titre de renforcement de carcasse pour une paire de portions de flancs (2) reliées aux portions de talons mentionnées ci-dessus, et une portion de bande de roulement (3), au moins une nappe de câblés de ladite carcasse étant enroulée autour d'une tringle de talon (4) de la portion de talon depuis l'intérieur vers l'extérieur pour former une structure de retournement, caractérisé en ce que, lorsque le bandage pneumatique est monté sur une jante normale (7) et gonflé sous une pression interne correspondant à 5% d'une pression interne normale, une ligne de carcasse de la carcasse en coupe radiale du bandage pneumatique, à une position qu'elle prend d'elles-même sans être soumise à une charge, possède au moins deux points d' inflexion entre les positions A et B, A étant un point d'intersection avec une ligne verticale tracée depuis une ligne de base de jante RL sur la largeur de la jante normale et B étant une position correspondant à la largeur maximale de la carcasse, et en ce que l'extrémité de retournement de la carcasse est disposée dans une région définie par deux lignes parallèles $Q_1$ et $Q_2$, $Q_1$ et $Q_2$ étant tracées en parallèle perpendiculairement à une ligne droite L définie a reliant l'un à l'autre deux points d'inflexion proches de la position A à une distance d qui n'est pas supérieure à 10 mm d'un point P séparé au maximum de la ligne droite L et disposé sur la ligne de carcasse.

2. Bandage pneumatique à nappe radiale, comprenant une carcasse (5) qui comprend au moins une nappe de câblés s'étendant en une configuration toroïdale entre une paire de portions de talons (1), à titre de renforcement de carcasse pour une paire de portions de flancs (2) reliées aux portions de talons mentionnées ci-dessus, et une portion de bande de roulement (3), au moins une nappe de câblés de ladite carcasse étant enroulée autour d'une tringle de talon (4) de la portion de talon depuis l'intérieur vers l'extérieur pour former une structure de retournement, et une bandelette (9) arrangée de façon à recouvrir l'extrémité de retournement, caractérisé en ce que, lorsque le bandage pneumatique est monté sur une jante normale (7) et gonflé sous une pression interne correspondant à 5% d'une pression interne normale, une ligne de carcasse de la carcasse en coupe radiale du bandage pneumatique, à une position qu'elle prend d'elle-même sans être soumise à une charge, possède au moins deux points d'inflexion entre les positions A et B, A étant un point d'intersection avec une ligne verticale tracée depuis une ligne de base de jante RL sur la largeur de la jante normale et B étant une position correspondant à la largeur maximale de la carcasse, et en ce qu'au moins une des extrémités de retournement de la carcasse et l'extrémité de la bandelette sont disposées dans une région définie par deux lignes parallèles $Q_1$ et $Q_2$, $Q_1$ et $Q_2$ étant tracées en parallèle perpendiculairement à une ligne droite L définie en reliant l'un à l'autre deux points d'inflexion proches de la position A à une distance d qui n'est pas supérieure à 10 mm d'un point P séparé au maximum de la ligne droite L et disposé sur la ligne de carcasse.

3. Bandage pneumatique selon la revendication 1 ou 2, caractérisé en ce que ladite distance d se situe dans le domaine de 4 à 6 mm.

# FIG_1a

# FIG_Ib

# FIG.2

# FIG_3

## FIG.4

# FIG_5

6

5 Carcass Profile
Accoding to the
Invention

5'
Conventional
Carcass Profile

4

# FIG_6

# FIG_7